# EUROPEAN PATENT APPLICATION

(11) **EP 3 316 526 A1**
(43) Date of publication of application: **02.05.2018**
(21) Application number: 15899302.2
(22) Date of filing: 30.07.2015
(51) Int. Cl.: H04L 12/46, H04L 12/70

(54) **METHOD, APPARATUS AND DEVICE FOR DATA TRANSMISSION AND GENERATION OF ADDRESS MAPPING TABLE**

(71) Applicant: Huawei Technologies Co., Ltd., Longgang District Shenzhen, Guangdong 518129 (CN)
(72) Inventor: HU, Guojie, Shenzhen Guangdong 518129 (CN); CHEN, Jason Jiangnan, Shenzhen Guangdong 518129 (CN); WU, Juntao, Shenzhen Guangdong 518129 (CN); MCCANN, Peter J., Shenzhen Guangdong 518129 (CN); JIN, Aijin, Shenzhen Guangdong 518129 (CN)
(74) Representative: Goddar, Heinz J.
(86) International application number: PCT/CN2015/085562
(87) International publication number: WO 2017/015950

(57) **Abstract**

Embodiments of the present invention relate to the field of communications technologies, and disclose a data transmission method, apparatus, and device, and a method, an apparatus, and a device for generating an address mapping table, so that a terminal for which a single APN is configured can access not only a PDN, but also an internal local area network of a company. The method in the embodiments of the present invention includes: when a first data packet sent by a terminal carries a first PDN destination IP address, obtaining an address mapping table, replacing a first local source IP address, generating a second data packet, and sending the second data packet to a PGW; and when a third data packet sent by a target server or the PGW carries a second local source IP address, sending the third data packet to the terminal, or when a third data packet carries a second PDN source IP address, obtaining a correspondence, replacing a second local destination IP address, and generating and sending a fourth data packet to the terminal. The present invention is applicable to a network system.

## Description

### TECHNICAL FIELD

The present invention relates to the field of communications technologies, and in particular, to a data transmission method, apparatus, and device, and a method, an apparatus, and a device for generating an address mapping table.

### BACKGROUND

With development of communications technologies, especially with popularity of the Internet, the 3GPP (3rd Generation Partnership Project, 3rd Generation Partnership Project) protocol may use different APNs (Access Point Name, access point) to distinguish between different PDNs (Packet Data Network, packet data network). The PDNs may be used to represent different networks, for example, the Internet (Internet) and an IMS (IP Multimedia Subsystem, IP multimedia subsystem) technology. Moreover, one PGW (PDN GateWay, PDN gateway) may be connected to multiple PDNs, and one PDN may be accessed from multiple PGWs.

At present, an operator may configure multiple APNs for different application scenarios to ensure that different services of the operator are implemented by using respective PDNs. Moreover, to ensure that data of a terminal can be smoothly transmitted to a target PDN, different APNs are usually used to distinguish between PDNs. When a terminal can support multiple APNs, the terminal may access networks with different IP addresses by using different APNs. For example, the terminal may access a PDN through an egress of a PGW of the operator by using an APN1, and access the Internet through an egress of an internal PGW of a company by using an APN2 and a local area network. However, one APN is corresponding to one PDN. Therefore, for a terminal supporting only a single APN, the terminal can access, by using the single APN, only a PDN corresponding to the single APN, and cannot access an internal local area network of a company at a same moment. As a result, the terminal cannot access an internal service of the company.

### SUMMARY

Embodiments of the present invention provide a data transmission method, apparatus, and device, and a method, an apparatus, and a device for generating an address mapping table, so that a terminal for which a single APN is configured can access not only a PDN, but also an internal local area network of a company.

To achieve the preceding objectives, the embodiments of the present invention use the following technical solutions:
According to a first aspect, an embodiment of the present invention provides a data transmission method, where the method includes:
   obtaining, by a switch, a first data packet sent by a terminal, where the first data packet carries a first destination IP address and a first local source IP address, and the first destination IP address includes a first local destination IP address or a first packet data network PDN destination IP address;
   when the first destination IP address is the first PDN destination IP address, obtaining, by the switch, an address mapping table from a local controller, where the address mapping table is used to record a correspondence between the first local source IP address and a first PDN source IP address;
   replacing, by the switch, the first local source IP address carried in the first data packet with the first PDN source IP address according to the correspondence, and generating a second data packet; and
   sending, by the switch, the second data packet to a PDN gateway PGW.

With reference to the first aspect, in a first possible implementation of the first aspect, before the obtaining, by the switch, an address mapping table from a local controller, the method includes:
when the address mapping table is not stored in the switch, sending, by the switch, request information to the local controller, where the request information is used to trigger the local controller to send the address mapping table to the switch.

With reference to the first aspect or the first possible implementation of the first aspect, in a second possible implementation of the first aspect, the sending, by the switch, the second data packet to a PGW includes:
sending, by the switch, the second data packet to the PGW by using a PDN connection established by the local controller.

With reference to any one of the first aspect or the first to the second possible implementations of the first aspect, in a third possible implementation of the first aspect, before the obtaining, by the switch, an address mapping table from a local controller, the method further includes:
determining, by the switch, whether the first destination IP address is the first local destination IP address; and
when the first destination IP address is the first local destination IP address, sending, by the switch, the first data packet to a target server.

According to a second aspect, an embodiment of the present invention provides a data transmission method, where the method includes:
obtaining, by a switch, a third data packet sent by a target server or a packet data network PDN gateway PGW, where the third data packet carries a second source IP address and a second local destination IP address, and the second source IP address includes a second local source IP address or a second PDN source IP address;
when the second source IP address is the second PDN source IP address, obtaining, by the switch, an address mapping table from a local controller, where the address mapping table is used to record a correspondence between the second local destination IP address and a second PDN destination IP address;
replacing, by the switch, the second local destination IP address carried in the third data packet with the second PDN destination IP address according to the correspondence, and generating a fourth data packet; and sending, by the switch, the fourth data packet to a terminal.

With reference to the second aspect, in a first possible implementation of the second aspect, before the obtaining, by the switch, an address mapping table from a local controller, the method further includes:
determining, by the switch, whether the second source IP address is the second local source IP address; and
when the second source IP address is the second local source IP address, sending, by the switch, the third data packet to the terminal.

According to a third aspect, an embodiment of the present invention provides a method for generating an address mapping table, where the method includes:
obtaining, by a local controller, a first packet data network PDN source IP address and a first local source IP address; and
generating, by the local controller, an address mapping table according to the first PDN source IP address and the first local source IP address, so that a switch forwards a data packet according to the address mapping table, where the address mapping table is used to record a correspondence between the first local source IP address and the first PDN source IP address.

With reference to the third aspect, in a first possible implementation of the third aspect, the obtaining, by a local controller, a first packet data network PDN source IP address and a first local source IP address includes:
allocating, by the local controller, the first local source IP address to a terminal; and
sending, by the local controller, PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

According to a fourth aspect, an embodiment of the present invention provides a data transmission apparatus, where the apparatus includes:
an obtaining module, configured to obtain a first data packet sent by a terminal, where the first data packet carries a first destination IP address and a first local source IP address, the first destination IP address includes a first local destination IP address or a first packet data network PDN destination IP address, and
the obtaining module is further configured to: when the first destination IP address is the first PDN destination IP address, obtain an address mapping table from a local controller, where the address mapping table is used to record a correspondence between the first local source IP address and a first PDN source IP address;
a generation module, configured to replace the first local source IP address carried in the first data packet with the first PDN source IP address according to the correspondence obtained by the obtaining module, and generate a second data packet; and
a sending module, configured to send the second data packet to a PDN gateway PGW.

With reference to the fourth aspect, in a first possible implementation of the fourth aspect, the sending module is further configured to:
when the address mapping table is not stored in the switch, send request information to the local controller, where the request information is used to trigger the local controller to send the address mapping table to the switch.

With reference to the fourth aspect or the first possible implementation of the fourth aspect, in a second possible implementation of the fourth aspect, the sending module is specifically configured to:
send the second data packet to the PGW by using a PDN connection established by the local controller.

With reference to any one of the fourth aspect or the first to the second possible implementations of the fourth aspect, in a third possible implementation of the fourth aspect, the apparatus further includes:
a determining module, configured to determine whether the first destination IP address is the first local destination IP address; and
the sending module is further configured to: when the first destination IP address is the first local destination IP address, send the first data packet to a target server.

According to a fifth aspect, an embodiment of the present invention provides a data transmission apparatus, where the apparatus includes:
an obtaining module, configured to obtain a third data packet sent by a target server or a packet data network PDN gateway PGW, where the third data packet carries a second source IP address and a second local destination IP address, the second source IP address includes a second local source IP address or a second PDN source IP address, and
the obtaining module is further configured to: when the second source IP address is the second PDN source IP address, obtain an address mapping table from a local controller, where the address mapping table is used to record a correspondence between the second local destination IP address and a second PDN destination IP address;
a generation module, configured to replace the second local destination IP address carried in the third data packet with the second PDN destination IP address according to the correspondence obtained by the obtaining module, and generate a fourth data packet; and
a sending module, configured to send, to a terminal, the fourth data packet generated by the generation module.

With reference to the fifth aspect, in a first possible implementation of the fifth aspect, the apparatus further includes:
a determining module, configured to determine whether the second source IP address is the second local source IP address; and
the sending module is further configured to: when the second source IP address is the second local source IP address, send the third data packet to the terminal.

According to a sixth aspect, an embodiment of the present invention provides an apparatus for generating an address mapping table, where the apparatus includes:
an obtaining module, configured to obtain a first packet data network PDN source IP address and a first local source IP address; and
a generation module, configured to generate an address mapping table according to the first PDN source IP address and the first local source IP address that are obtained by the obtaining module, so that a switch forwards a data packet according to the address mapping table, where the address mapping table is used to record a correspondence between the first local source IP address and the first PDN source IP address.

With reference to the sixth aspect, in a first possible implementation of the sixth aspect, the obtaining module is specifically configured to:
allocate the first local source IP address to a terminal; and
send PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

According to a seventh aspect, an embodiment of the present invention provides a data transmission device, where the device includes an interface circuit and a processor, where the interface circuit is configured to obtain a first data packet sent by a terminal, the first data packet carries a first destination IP address and a first local source IP address, and the first destination IP address includes a first local destination IP address or a first packet data network PDN destination IP address;
the interface circuit is further configured to: when the first destination IP address is the first PDN destination IP address, obtain an address mapping table from a local controller, where the address mapping table is used to record a correspondence between the first local source IP address and a first PDN source IP address;
the processor is configured to replace the first local source IP address carried in the first data packet with the first PDN source IP address according to the correspondence obtained by the interface circuit, and generate a second data packet; and
the interface circuit is further configured to send the second data packet to a PDN gateway PGW.

With reference to the seventh aspect, in a first possible implementation of the seventh aspect, the interface circuit is further configured to:
when the address mapping table is not stored in the switch, send request information to the local controller, where the request information is used to trigger the local controller to send the address mapping table to the switch.

With reference to the seventh aspect or the first possible implementation of the seventh aspect, in a second possible implementation of the seventh aspect, the interface circuit is specifically configured to:
send the second data packet to the PGW by using a PDN connection established by the local controller.

With reference to any one of the seventh aspect or the first to the second possible implementations of the seventh aspect, in a third possible implementation of the seventh aspect, the processor is further configured to:
determine whether the first destination IP address is the first local destination IP address; and
when the first destination IP address is the first local destination IP address, send the first data packet to a target server.

According to an eighth aspect, an embodiment of the present invention provides a data transmission device, where the device includes an interface circuit and a processor, where the interface circuit is configured to obtain a third data packet sent by a target server or a packet data network PDN gateway PGW, the third data packet carries a second source IP address and a second local destination IP address, and the second source IP address includes a second local source IP address or a second PDN source IP address;
the interface circuit is further configured to: when the second source IP address is the second PDN source IP address, obtain an address mapping table from a local controller, where the address mapping table is used to record a correspondence between the second local destination IP address and a second PDN destination IP address;
the processor is configured to replace the second local destination IP address carried in the third data packet with the second PDN destination IP address according to the correspondence, and generate a fourth data packet; and
the interface circuit is further configured to send the fourth data packet to a terminal.

With reference to the eighth aspect, in a first possible implementation of the eighth aspect, the processor is further configured to determine whether the second source IP address is the second local source IP address; and
the interface circuit is further configured to: when the second source IP address is the second local source IP address, send the third data packet to the terminal.

According to a ninth aspect, an embodiment of the present invention provides a device for generating an address mapping table, where the device includes an interface circuit and a processor, where the interface circuit is configured to obtain a first packet data network PDN source IP address and a first local source IP address; and
the processor is configured to generate an address mapping table according to the first PDN source IP address and the first local source IP address, so that a switch forwards a data packet according to the address mapping table, where the address mapping table is used to record a correspondence between the first local source IP address and the first PDN source IP address.

With reference to the ninth aspect, in a first possible implementation of the ninth aspect, the interface circuit is specifically configured to:
allocate the first local source IP address to a terminal; and
send PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

In the data transmission method, apparatus, and device, and the method, apparatus, and device for generating an address mapping table that are provided in the embodiments of the present invention, the switch obtains the first data packet sent by the terminal; when the destination IP address carried in the first data packet is the first PDN destination IP address, obtains the address mapping table that records the correspondence between the first local source IP address and the first PDN source IP address; replaces the first local source IP address carried in the first data packet with the first PDN source IP address according to the correspondence, and generates the second data packet; and sends the second data packet to the PGW. The switch obtains the third data packet sent by the target server or the PGW, obtains the correspondence when the third data packet carries the second PDN source IP address, replaces the second local destination IP address carried in the third data packet with the second PDN destination IP address, generates the fourth data packet, and sends the fourth data packet to the terminal. The address mapping table may be generated by the local controller after the local controller obtains the first local source IP address and the first PDN source IP address. Compared with the prior art in which only a terminal supporting multiple APNs can be used to establish connections to multiple networks, so as to access the multiple networks, in the embodiments of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. When a data packet sent by the target server or the PGW is transmitted to the switch, the switch can determine a destination IP address according to a source IP address carried in the data packet, so as to determine a data packet that needs to be sent to the terminal. Therefore, a terminal for which a single APN is configured can access not only the PDN, but also the internal local area network of the company. For the terminal for which a single APN is configured, not only a data packet sent by the PDN can be transmitted to the terminal, but also a data packet sent by the internal local area network of the company can be transmitted to the terminal.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a specific application scenario according to an embodiment of the present invention;
FIG. 2 is a flowchart of a data transmission method according to an embodiment of the present invention;
FIG. 3 is a flowchart of another data transmission method according to an embodiment of the present invention;
FIG. 4 is a flowchart of another data transmission method according to an embodiment of the present invention;
FIG. 5 is a flowchart of another data transmission method according to an embodiment of the present invention;
FIG. 6 is an interaction flowchart of initiating a PDN connection request by a local controller (Local Controller) according to an embodiment of the present invention;
FIG. 7A and FIG. 7B are an interaction flowchart of an initial attach call of a terminal according to an embodiment of the present invention;
FIG. 8 is a flowchart of another data transmission method according to an embodiment of the present invention;
FIG. 9 is a flowchart of another data transmission method according to an embodiment of the present invention;
FIG. 10 is a flowchart of a method for generating an address mapping table according to an embodiment of the present invention;
FIG. 11 is a flowchart of another method for generating an address mapping table according to an embodiment of the present invention;
FIG. 12 is a schematic structural diagram of a data transmission apparatus according to an embodiment of the present invention;
FIG. 13 is a schematic structural diagram of another data transmission apparatus according to an embodiment of the present invention;
FIG. 14 is a schematic structural diagram of an apparatus for generating an address mapping table according to an embodiment of the present invention;
FIG. 15 is a schematic structural diagram of a data transmission device according to an embodiment of the present invention;
FIG. 16 is a schematic structural diagram of another data transmission device according to an embodiment of the present invention; and
FIG. 17 is a schematic structural diagram of a device for generating an address mapping table according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

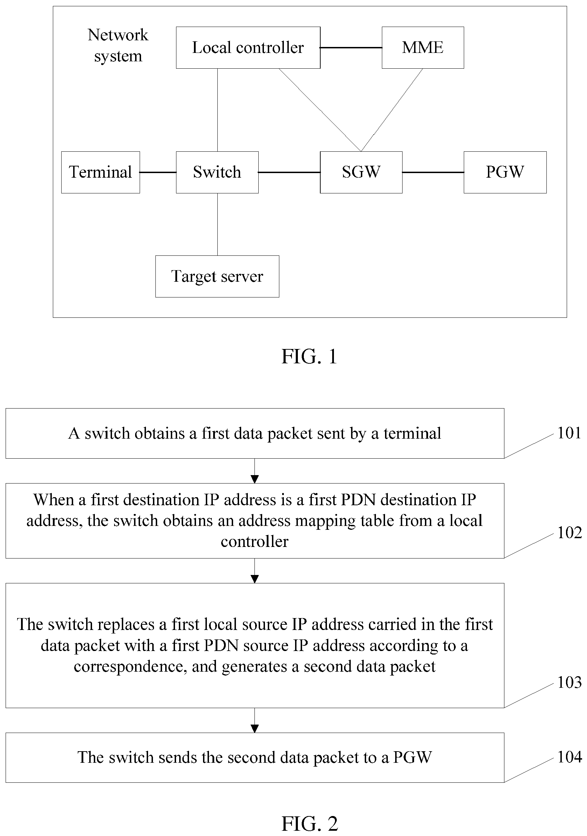

The embodiments of the present invention may be applied to a network system. In a network system shown in FIG. 1, a terminal, a switch, a local controller, a PGW, and a target server may be disposed. A single APN is configured for the terminal. The switch may be disposed inside a base station or disposed outside a base station, and is configured to determine, according to a data packet sent by the terminal, whether a target network that the terminal needs to access is an internal local area network of a company or a PDN, and a data packet that needs to be sent to the target network, so as to send the data packet to the target network. It should be noted that the local controller may generate an address mapping table according to a preconfigured policy, so as to send the address mapping table to the switch when a correspondence between a local source IP address and a PDN source IP address is not stored in the switch. The local controller may obtain a local source IP address by performing data interaction with a Dynamic Host Configuration Protocol DHCP (Dynamic Host Configuration Protocol) server, and allocates the local source IP address to the terminal. Alternatively, the local controller may allocate a local source IP address to the terminal according to a pre-written local source IP address. The PGW may allocate, to the terminal, a PDN source IP address for accessing a PDN. In the embodiments of the present invention, an SGW (Serving GateWay, serving gateway) and an MME (Mobility Management Entity, mobility management entity) may be further disposed in the network system, so that the local controller initiates a PDN connection request on behalf of the terminal. A specific implementation will be presented in the following. It should be noted that, in the embodiments of the present invention, the switch may be an OVS (Open VSwitch, Open vSwitch) or an LGW (Local Gateway, local gateway), and the local controller may be a local control center (local control center) or an SDN (Software Defined Network, Software-Defined Networking) controller.

An embodiment of the present invention provides a data transmission method. All procedures of the method are implemented by a switch. In a transmission process of uplink data, as shown in FIG. 2, the method includes the following steps.
101. The switch obtains a first data packet sent by a terminal.

The first data packet carries a first destination IP address and a first local source IP address, and the first destination IP address includes a first local destination IP address or a first packet data network PDN destination IP address.

The terminal may send the first data packet to the switch by using a base station. Then, the switch obtains the first data packet sent by the terminal, and obtains the first destination IP address from the first data packet. In this embodiment of the present invention, a manner of determining a type of the first destination IP address is not specifically limited. The type of the first destination IP address may be determined according to the first destination IP address carried in the first data packet, or the type of the first destination IP address may be determined according to a quintuple of the first data packet, that is, according to a source IP address, a source port, a destination IP address, a destination port, and a transport layer protocol. It should be noted that the switch may obtain, by using an LTE (Long Term Evolution, Long Term Evolution) network or a wireless network, the first data packet sent by the terminal.
102. When a first destination IP address is a first PDN destination IP address, the switch obtains an address mapping table from a local controller.

The address mapping table is used to record a correspondence between the first local source IP address and a first PDN source IP address.

When the switch determines, after decapsulating the first data packet, that the first destination IP address is the first PDN destination IP address, the switch may obtain the address mapping table stored in the local controller. It should be noted that, in this embodiment of the present invention, the switch may send request information for obtaining the address mapping table to the local controller, to obtain the address mapping table, and store the obtained address mapping table in the switch. When a routing table has been stored in the switch, the switch may directly obtain the locally stored address mapping table, with no need to send request information to the local controller.
103. The switch replaces a first local source IP address carried in the first data packet with a first PDN source IP address according to a correspondence, and generates a second data packet.

According to the correspondence between the first local source IP address and the first PDN source IP address, the switch may translate the first local source IP address into the first PDN source IP address, that is, replace the first local source IP address carried in the first data packet with the first PDN source IP address. Then, the switch generates the second data packet according to the first PDN source IP address and IP data that is obtained by means of decapsulation, and sends the second data packet to a PGW. In this embodiment of the present invention, a translation manner of the first PDN source IP address is not limited. The switch may translate the first local source IP address into the first PDN source IP address by means of NAT (Network Address Translation, network address translation), or translate the first local source IP address into the first PDN source IP address in another network address translation manner. For example, a local source IP address allocated by the local controller to the terminal is a local IP address, and a PDN source IP address allocated by the PGW to the terminal is a home-routed IP address. When the terminal performs an operator's service, the switch may translate the local IP address of the terminal into the home-routed IP address by means of NAT.
104. The switch sends the second data packet to a PGW.

In the data transmission method provided in this embodiment of the present invention, the switch obtains the first data packet sent by the terminal; when the destination IP address carried in the first data packet is the first PDN destination IP address, obtains the address mapping table that records the correspondence between the first local source IP address and the first PDN source IP address; replaces the first local source IP address carried in the first data packet with the first PDN source IP address according to the correspondence, and generates the second data packet; and sends the second data packet to the PGW. Compared with the prior art in which only a terminal supporting multiple APNs can be used to establish connections to multiple networks, so as to access the multiple networks, in this embodiment of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. Therefore, a terminal for which a single APN is configured can access not only the PDN, but also the internal local area network of the company.

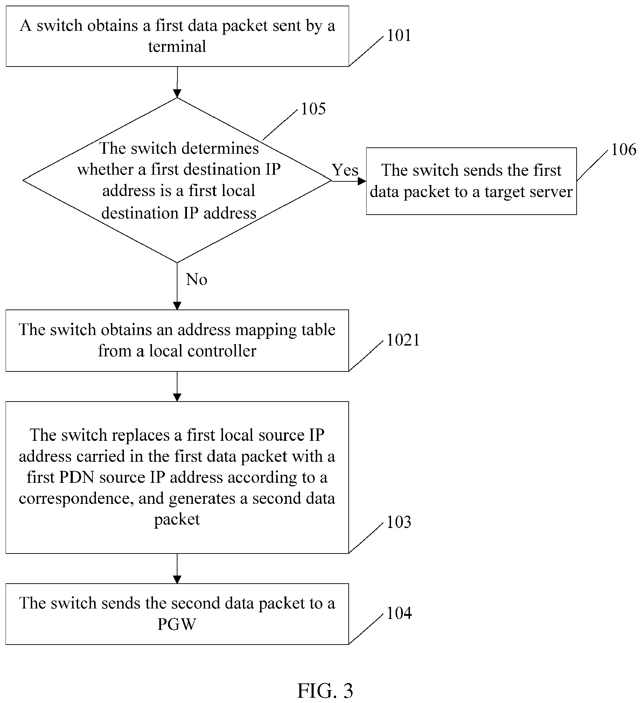

The first destination IP address may be the first local destination IP address or the first PDN destination IP address. Therefore, the switch may first determine whether the first destination IP address is the first local destination IP address or the first PDN destination IP address, and then determine, according to different first destination IP addresses, whether to send a processed first data packet to the target network. In an implementation of this embodiment of the present invention, based on the implementation shown in FIG. 2, the method may be alternatively implemented as an implementation shown in FIG. 3. Before the obtaining, by the switch, an address mapping table from a local controller in step 102 is performed, that is, before step 1021 is performed, step 105 and step 106 may be further performed.
105. The switch determines whether the first destination IP address is the first local destination IP address. When the first IP address is the first local destination IP address, step 106 is performed; otherwise, step 1021, step 103, and step 104 are performed.
106. The switch sends the first data packet to a target server.

It should be noted that the switch may obtain IP data by decapsulating uplink data, that is, by decapsulating the first data packet, and then perform determining according to a first destination IP address of the IP data. When the first destination IP address obtained by the switch from the first data packet in step 101 is the first local destination IP address, the switch may be considered as a local gateway, that is, the switch may forward, to the target server, the first data packet that is sent by the terminal to the switch by using the base station. For example, a local source IP address allocated by the local controller to the terminal is a local IP address, and a PDN source IP address allocated by the PGW to the terminal is a home-routed IP address. When the terminal performs a local service, the switch may be directly used as the local gateway.
1021. The switch obtains the address mapping table from the local controller.

In the data transmission method provided in this embodiment of the present invention, the switch obtains the first data packet sent by the terminal; when the destination IP address carried in the first data packet is the first PDN destination IP address, obtains the address mapping table that records the correspondence between the first local source IP address and the first PDN source IP address; replaces the first local source IP address carried in the first data packet with the first PDN source IP address according to the correspondence, and generates the second data packet; and sends the second data packet to the PGW. When the destination IP address carried in the first data packet is the first local destination IP address, the switch may directly send the first data packet to the target server. Compared with the prior art in which only a terminal supporting multiple APNs can be used to establish connections to multiple networks, so as to access the multiple networks, in this embodiment of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. Therefore, a terminal for which a single APN is configured can access not only the PDN, but also the internal local area network of the company.

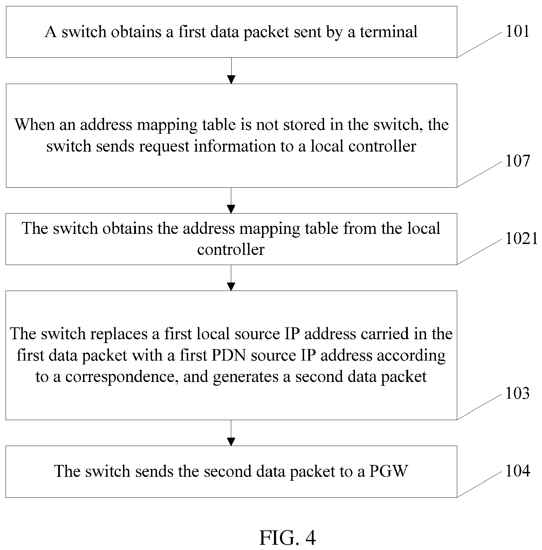

To ensure that the switch can provide the address mapping table for the determined target network, in an implementation of this embodiment of the present invention, when the address mapping table is not stored in the switch, the switch may send request information to the local controller to obtain the address mapping table. Therefore, before step 1021 that the switch obtains the address mapping table from the local controller is performed, step 107 shown in FIG. 4 may be performed.
107. When the address mapping table is not stored in the switch, the switch sends request information to the local controller.

The request information is used to trigger the local controller to send the address mapping table to the switch.

It should be noted that after step 107 is performed, the obtaining, by the switch, an address mapping table from a local controller in step 102 may be performed, that is, step 1021 may be performed. When the first destination IP address is the first PDN destination IP address, the switch may determine, according to whether the address mapping table is stored, whether the request information for obtaining the address mapping table needs to be sent to the local controller. When the address mapping table is stored in the switch, the switch may directly obtain the correspondence between the first local source IP address and the first PDN source IP address from the address mapping table, with no need to obtain the address mapping table from the local controller again.

In the data transmission method provided in this embodiment of the present invention, the switch obtains the first data packet sent by the terminal. When the destination IP address carried in the first data packet is the first PDN destination IP address, and if the address mapping table is not stored in the switch, the switch may send the request information to the local controller, to obtain the address mapping table and obtain the correspondence that records the first local source IP address and the first PDN source IP address, replace the first local source IP address carried in the first data packet with the first PDN source IP address according to the correspondence, generate the second data packet, and send the second data packet to the PGW. When the address mapping table is not stored in the switch, the switch sends the request information to the local controller to obtain the address mapping table. Compared with the prior art in which only a terminal supporting multiple APNs can be used to establish connections to multiple networks, so as to access the multiple networks, in this embodiment of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. Moreover, when an address mapping table is not stored in the switch, the switch may send request information to a local controller to obtain the address mapping table, so as to provide the address mapping table for the determined network. Therefore, a terminal for which a single APN is configured can access not only the PDN, but also the internal local area network of the company.

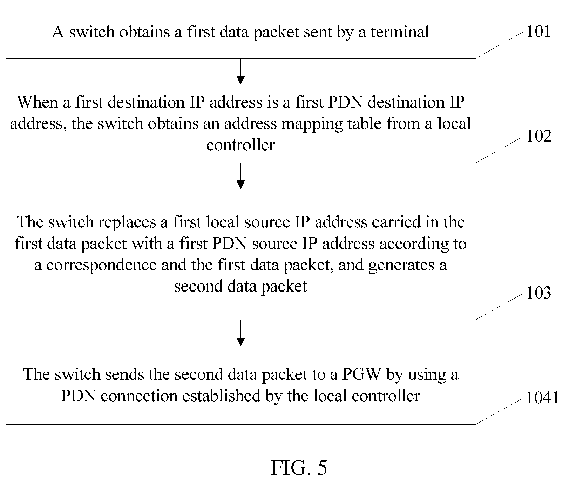

The switch may send the second data packet to the PGW by using a PDN connection established by the local controller. Therefore, in an implementation of this embodiment of the present invention, based on the implementation shown in FIG. 2, step 104 that the switch sends the second data packet to a PGW may be specifically implemented as step 1041 shown in FIG. 5.
1041. The switch sends the second data packet to the PGW by using a PDN connection established by the local controller.

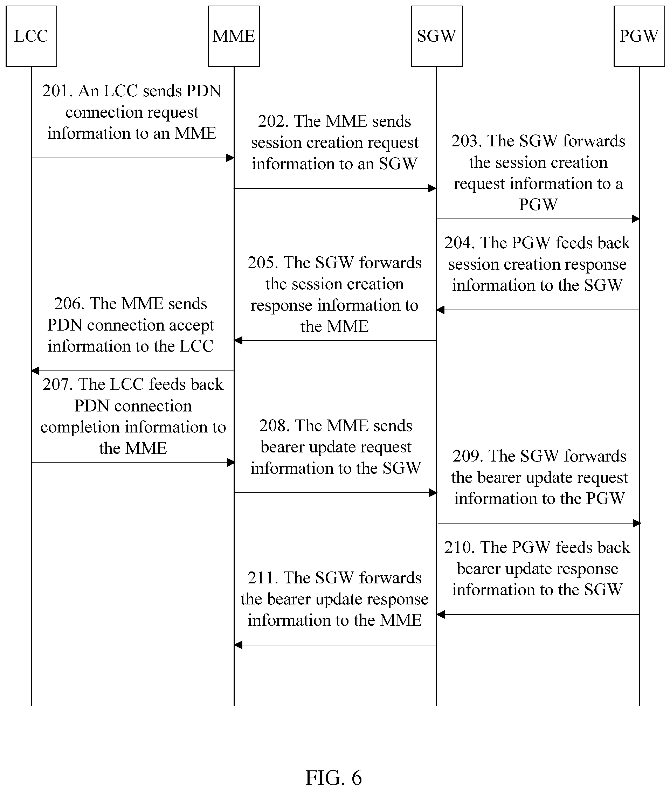

In this embodiment of the present invention, the terminal may establish a local PDN connection by using a single APN, that is, establish a PDN connection to an internal local area network of a company by using the single APN. In this case, the terminal may obtain the first local source IP address. Then, the local controller may obtain the first PDN source IP address after completing an interaction process shown in FIG. 6. It should be noted that, in an interaction flowchart shown in FIG. 6, an LCC is used as the local controller. In this case, the local controller stores, in a form of the address mapping table, the correspondence between the first local source IP address and the first PDN source IP address in a storage area of the local controller. It should be noted that neither the terminal nor the base station can sense a process of initiating PDN connection establishment by the local controller on behalf of the terminal, thereby ensuring that a terminal for which a single APN is configured can be free from a limitation of a one-to-one correspondence between an APN and a PDN.

For example, a local controller is an LCC. FIG. 6 shows a process of interaction between an LCC, an MME, an SGW, and a PGW when the LCC initiates a PDN connection request on behalf of a terminal. Specific steps are as follows:
201. The LCC sends PDN connection request information to the MME. 202. The MME sends session creation request information to the SGW. 203. The SGW forwards the session creation request information to the PGW. 204. The PGW feeds back session creation response information to the SGW. 205. The SGW forwards the session creation response information to the MME. 206. The MME sends PDN connection accept information to the LCC. 207. The LCC feeds back PDN connection completion information to the MME. 208. The MME sends bearer update request information to the SGW. 209. The SGW forwards the bearer update request information to the PGW. 210. The PGW feeds back bearer update response information to the SGW. 211. The SGW forwards the bearer update response information to the MME.

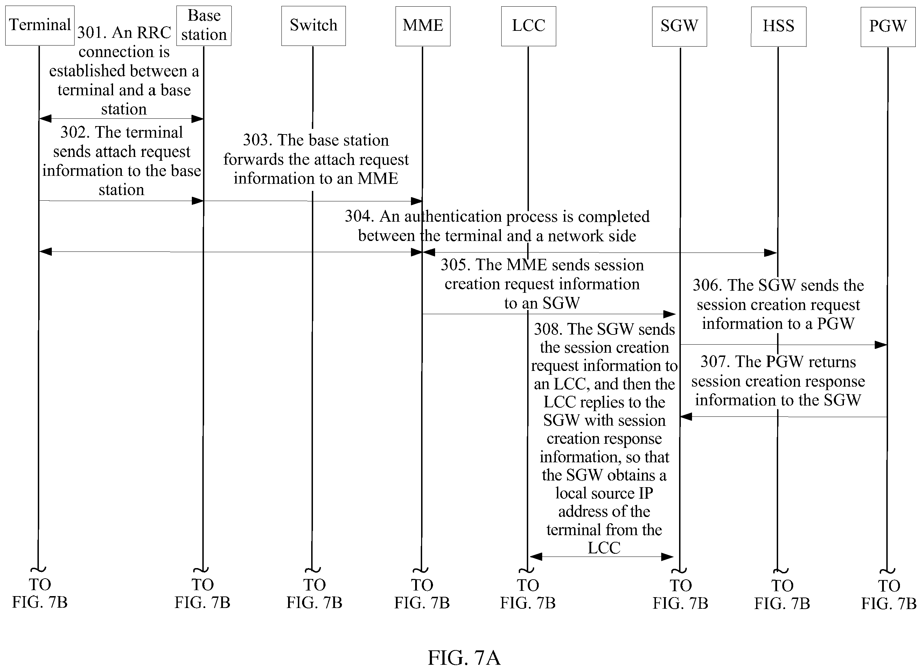

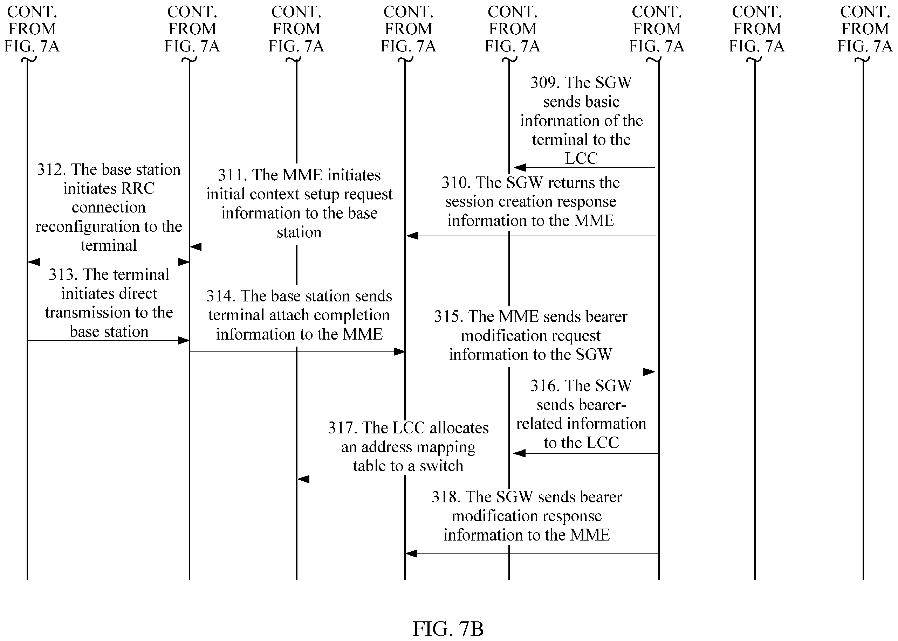

It should be noted that the LCC may trigger simulated initiation of a PDN connection in a period of time, for example, 10 seconds, after completing an attach (attach) process of the terminal, that is, after completing a process shown in FIG. 7A and FIG. 7B. The PDN connection request information in step 201, the PDN connection accept information in step 206, and the PDN connection completion information in step 207 each are carried in a private message, that is, need to be specially processed by the MME. It should be noted that the period of time may be preset according to different application scenarios. A manner of setting the period of time is not limited in this embodiment of the present invention.

FIG. 7A and FIG. 7B show an initial attach call flow (Initial attach call flow) of a terminal. The initial attach call flow is implemented by means of information exchange between the terminal, a base station, a switch, an MME, an LCC, an SGW, an HSS (Home Subscriber Server, home subscriber server), and a PGW. Specific steps are as follows:
301. An RRC connection is established between the terminal and the base station. 302. The terminal sends attach request information to the base station. 303. The base station forwards the attach request information to the MME. 304. An authentication process is completed between the terminal and a network side. 305. The MME sends session creation request information to the SGW. 306. The SGW sends the session creation request information to the PGW. 307. The PGW returns session creation response information to the SGW. 308. The SGW sends the session creation request information to the LCC, and then the LCC returns session creation response information to the SGW, so that the SGW obtains a local source IP address of the terminal from the LCC. 309. The SGW sends basic information of the terminal to the LCC. 310. The SGW returns the session creation response information to the MME. 311. The MME initiates initial context setup request information to the base station. 312. The base station initiates RRC connection reconfiguration to the terminal. 313. The terminal initiates direct transmission to the base station. 314. The base station sends terminal attach completion information to the MME. 315. The MME sends bearer modification request information to the SGW. 316. The SGW sends bearer-related information to the LCC. 317. The LCC allocates an address mapping table to the switch. 318. The SGW sends bearer modification response information to the MME.

It should be noted that after step 314 that the base station sends terminal attach completion information to the MME is completed, the terminal may send uplink data to the PGW; and after step 317 that the LCC allocates an address mapping table to the switch is completed, the terminal may receive downlink data from the PGW, or may send uplink data to the PGW; in the receiving and sending processes, the terminal may obtain a new data packet by means of decapsulation and re-encapsulation, and send the new data packet to the PGW, or directly send IP data to a target server by means of decapsulation. In addition, when the switch receives a data packet delivered from a PDN, the switch may directly send the data packet to the base station. When the switch receives a data packet delivered from an internal local area network of a company, the switch may encapsulate the data packet and send the data packet to the base station. Then the base station may send the data packet to the terminal.

In the data transmission method provided in this embodiment of the present invention, the switch obtains the first data packet sent by the terminal; when the destination IP address carried in the first data packet is the first PDN destination IP address, obtains the address mapping table that records the correspondence between the first local source IP address and the first PDN source IP address; replaces the first local source IP address carried in the first data packet with the first PDN source IP address according to the correspondence, and generates the second data packet; and sends the second data packet to the PGW by using a PDN connection established by a local controller. Compared with the prior art in which only a terminal supporting multiple APNs can be used to establish connections to multiple networks, so as to access the multiple networks, in this embodiment of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. Therefore, a terminal for which a single APN is configured can access not only the PDN, but also the internal local area network of the company.

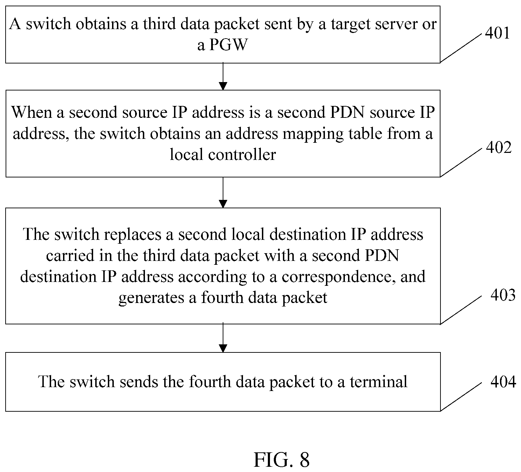

In a transmission process of downlink data, a switch may determine, according to a second destination address carried in a third data packet, a data packet that needs to be sent to a terminal. In an implementation of this embodiment of the present invention, as shown in FIG. 8, the following steps are included.
401. The switch obtains a third data packet sent by a target server or a PGW.

The third data packet carries a second source IP address and a second local destination IP address, and the second source IP address includes a second local source IP address or a second PDN source IP address.

It should be noted that a destination IP address in this embodiment of the present invention may be the same as the source IP address in step 101, that is, the second local destination IP address is the first local source IP address, and a second PDN destination IP address is the first PDN source IP address.
402. When a second source IP address is a second PDN source IP address, the switch obtains an address mapping table from a local controller.

The address mapping table is used to record a correspondence between the second local destination IP address and the second PDN destination IP address. It should be noted that the correspondence between the second local destination IP address and the second PDN destination IP address may also be obtained according to the address mapping table.
403. The switch replaces a second local destination IP address carried in the third data packet with a second PDN destination IP address according to a correspondence, and generates a fourth data packet.
404. The switch sends the fourth data packet to a terminal.

In the data transmission method provided in this embodiment of the present invention, the switch obtains the third data packet sent by the target server or the PGW, obtains the correspondence when the third data packet carries the second PDN source IP address, replaces the second local destination IP address carried in the third data packet with the second PDN destination IP address according to the correspondence, generates the fourth data packet, and sends the fourth data packet to the terminal. Compared with the prior art in which only a terminal supporting multiple APNs can be used to establish connections to multiple networks, so as to access the multiple networks, in this embodiment of the present invention, the switch is disposed, and when a data packet sent by the target server or the PGW is transmitted to the switch, the switch can determine a destination IP address according to a source IP address carried in the data packet, so as to determine that the data packet is sourced from an internal local area network of a company or a PDN, and determine a data packet that needs to be sent to the terminal. That is, there is no limitation of a one-to-one correspondence between an APN and a PDN, and the destination IP address is directly used to determine the data packet to be sent to the terminal, so as to send the data packet to the terminal. Therefore, for a terminal for which a single APN is configured, not only a data packet sent by the PDN can be transmitted to the terminal, but also a data packet sent by the internal local area network of the company can be transmitted to the terminal.

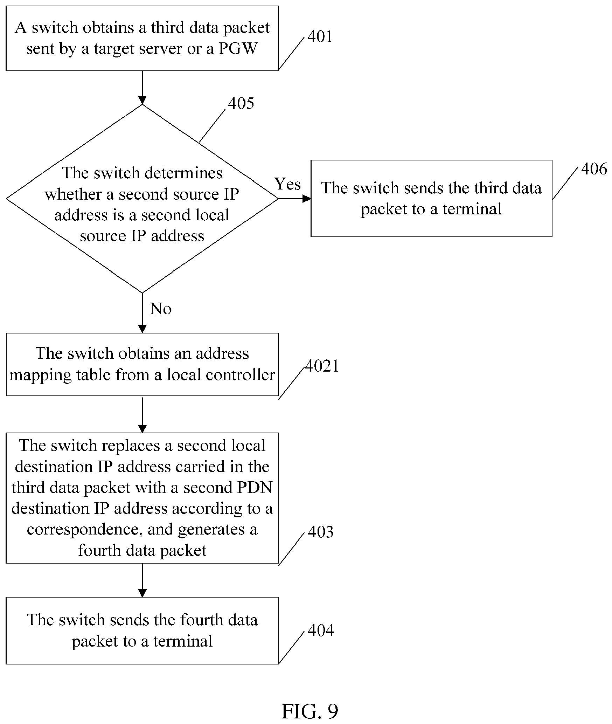

The second source IP address may be the second local source IP address or the second PDN source IP address. Therefore, the switch may first determine whether the second source IP address is the second local source IP address or the second PDN source IP address, and then determine, according to different second source IP addresses, whether to send a processed third data packet to the terminal. In an implementation of this embodiment of the present invention, based on the implementation shown in FIG. 8, the method may be alternatively implemented as an implementation shown in FIG. 9. Before the obtaining, by the switch, an address mapping table from a local controller in step 402 is performed, that is, before step 4021 is performed, step 405 and step 406 may be further performed.
405. The switch determines whether the second source IP address is the second local source IP address. When the second source IP address is the second local source IP address, step 406 is performed; otherwise, step 4021, step 403, and step 404 are performed.
406. The switch sends the third data packet to a terminal.
4021. The switch obtains the address mapping table from the local controller.

In the data transmission method provided in this embodiment of the present invention, the switch obtains the third data packet sent by the target server or the PGW, obtains the correspondence when the third data packet carries the second PDN source IP address, replaces the second local destination IP address carried in the third data packet with the second PDN destination IP address according to the correspondence, generates the fourth data packet, and sends the fourth data packet to the terminal. When a source IP address carried in the third data packet is the second local source IP address, the switch may directly send the third packet to the terminal. Compared with the prior art in which only a terminal supporting multiple APNs can be used to establish connections to multiple networks, so as to access the multiple networks, in this embodiment of the present invention, the switch is disposed, and when a data packet sent by the target server or the PGW is transmitted to the switch, the switch can determine a destination IP address according to a source IP address carried in the data packet, so as to determine that the data packet is sourced from an internal local area network of a company or a PDN, and determine a data packet that needs to be sent to the terminal. That is, there is no limitation of a one-to-one correspondence between an APN and a PDN, and the destination IP address is directly used to determine the data packet to be sent to the terminal, so as to send the data packet to the terminal. Therefore, for a terminal for which a single APN is configured, not only a data packet sent by the PDN can be transmitted to the terminal, but also a data packet sent by the internal local area network of the company can be transmitted to the terminal.

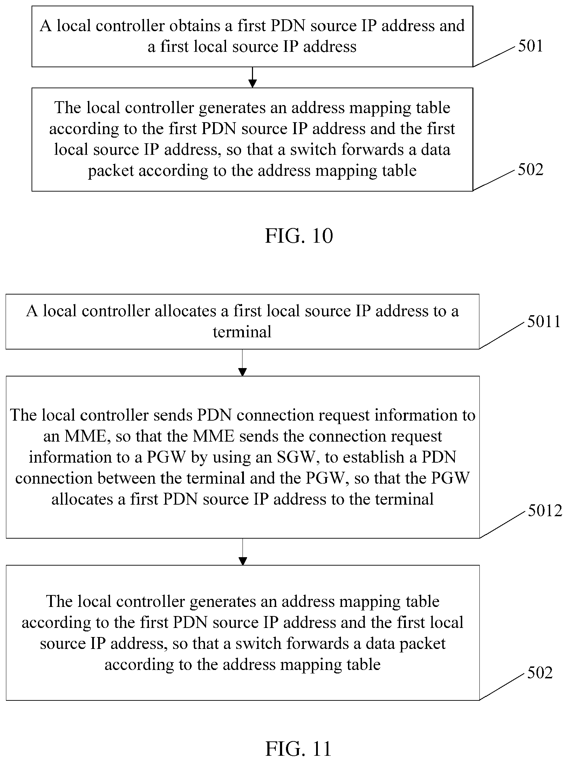

An embodiment of the present invention provides a method for an address mapping table. All procedures of the method are implemented by a local controller. As shown in FIG. 10, the method includes the following steps:
501. The local controller obtains a first PDN source IP address and a first local source IP address.
502. The local controller generates an address mapping table according to the first PDN source IP address and the first local source IP address, so that a switch forwards a data packet according to the address mapping table.

The address mapping table is used to record a correspondence between the first local source IP address and the first PDN source IP address.

In the method for an address mapping table in this embodiment of the present invention, the address mapping table may be generated by the local controller after the local controller obtains the first local source IP address and the first PDN source IP address. Compared with the prior art in which only a terminal supporting multiple APNs can be used to establish connections to multiple networks, so as to access the multiple networks, in this embodiment of the present invention, the local controller is disposed, and the local controller generates an address mapping table according to a first PDN source IP address allocated by the PGW to the terminal and a first local source IP address allocated by the local controller to the terminal, so that the switch sends a data packet to a target network according to the address mapping table, or sends a data packet to the terminal according to the address mapping table. Therefore, a terminal for which a single APN is configured can access not only a PDN, but also an internal local area network of a company. For the terminal for which a single APN is configured, not only a data packet sent by the PDN can be transmitted to the terminal, but also a data packet sent by the internal local area network of the company can be transmitted to the terminal.

To ensure that the local controller can successfully obtain the first PDN source IP address, in an implementation of this embodiment of the present invention, after the local controller allocates the first local source IP address to the terminal, the local controller needs to simulate the terminal to initiate PDN connection request information. This ensures that the PGW allocates the first PDN source IP address to the terminal after a PDN connection between the terminal and the PGW is established. Therefore, based on the implementation shown in FIG. 11, step 501 may be specifically implemented as step 5011 and step 5012.
5011. The local controller allocates the first local source IP address to a terminal.
5012. The local controller sends PDN connection request information to an MME, so that the MME sends the connection request information to a PGW by using an SGW, to establish a PDN connection between the terminal and the PGW, so that the PGW allocates the first PDN source IP address to the terminal.

In the method for an address mapping table in this embodiment of the present invention, after the local controller allocates the first local source IP address to the terminal, the local controller needs to simulate the terminal to initiate the PDN connection request information, to ensure that the PGW allocates the first PDN source IP address to the terminal after the PDN connection between the terminal and the PGW is established. Then, the local controller may generate the address mapping table according to the first local source IP address and the first PDN source IP address. Compared with the prior art in which only a terminal supporting multiple APNs can be used to establish connections to multiple networks, so as to access the multiple networks, in this embodiment of the present invention, the local controller is disposed, and the local controller generates an address mapping table according to a first PDN source IP address allocated by the PGW to the terminal and a first local source IP address allocated by the local controller to the terminal, so that the switch sends a data packet to a target network according to the address mapping table, or sends a data packet to the terminal according to the address mapping table. Therefore, a terminal for which a single APN is configured can access not only a PDN, but also an internal local area network of a company. For the terminal for which a single APN is configured, not only a data packet sent by the PDN can be transmitted to the terminal, but also a data packet sent by the internal local area network of the company can be transmitted to the terminal.

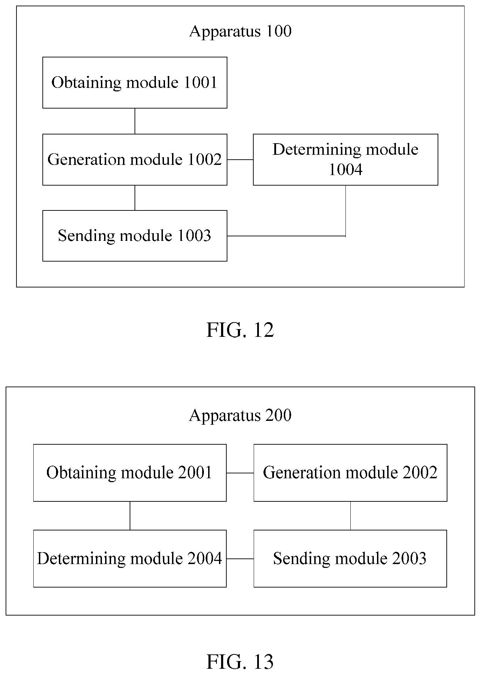

An embodiment of the present invention provides a data transmission apparatus 100. As shown in FIG. 12, the apparatus 100 includes:
an obtaining module 1001, configured to obtain a first data packet sent by a terminal, where the first data packet carries a first destination IP address and a first local source IP address, the first destination IP address includes a first local destination IP address or a first packet data network PDN destination IP address, and
the obtaining module 1001 is further configured to: when the first destination IP address is the first PDN destination IP address, obtain an address mapping table from a local controller, where the address mapping table is used to record a correspondence between the first local source IP address and a first PDN source IP address;
a generation module 1002, configured to replace the first local source IP address carried in the first data packet with the first PDN source IP address according to the correspondence obtained by the obtaining module 1001, and generate a second data packet; and
a sending module 1003, configured to send the second data packet to a PDN gateway PGW.

In an implementation of this embodiment of the present invention, the sending module 1003 is further configured to:
when the address mapping table is not stored in a switch, send request information to the local controller, where the request information is used to trigger the local controller to send the address mapping table to the switch.

In an implementation of this embodiment of the present invention, the sending module 1003 is specifically configured to:
send the second data packet to the PGW by using a PDN connection established by the local controller.

In an implementation of this embodiment of the present invention, the apparatus 100 further includes:
a determining module 1004, configured to determine whether the first destination IP address is the first local destination IP address.

The sending module 1003 is further configured to: when the determining module 1004 obtains, by means of determining, that the first destination IP address is the first local destination IP address, send the first data packet to a target server.

In the data transmission apparatus provided in this embodiment of the present invention, the switch obtains the first data packet sent by the terminal; when the destination IP address carried in the first data packet is the first PDN destination IP address, obtains the address mapping table that records the correspondence between the first local source IP address and the first PDN source IP address; replaces the first local source IP address carried in the first data packet with the first PDN source IP address according to the correspondence, and generates the second data packet; and sends the second data packet to the PGW. Compared with the prior art in which only a terminal supporting multiple APNs can be used to establish connections to multiple networks, so as to access the multiple networks, in this embodiment of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. Therefore, a terminal for which a single APN is configured can access not only the PDN, but also the internal local area network of the company.

An embodiment of the present invention provides a data transmission apparatus 200. As shown in FIG. 13, the apparatus 200 includes:
an obtaining module 2001, configured to obtain a third data packet sent by a target server or a packet data network PDN gateway PGW, where the third data packet carries a second source IP address and a second local destination IP address, the second source IP address includes a second local source IP address or a second PDN source IP address, and
the obtaining module 2001 is further configured to: when the obtained second source IP address is the second PDN source IP address, obtain an address mapping table from a local controller, where the address mapping table is used to record a correspondence between the second local destination IP address and a second PDN destination IP address;
a generation module 2002, configured to replace the second local destination IP address carried in the third data packet with the second PDN destination IP address according to the correspondence obtained by the obtaining module 2001, and generate a fourth data packet; and
a sending module 2003, configured to send the fourth data packet to a terminal.

In an implementation of this embodiment of the present invention, the apparatus 200 further includes:
a determining module 2004, configured to determine whether the second source IP address is the second local source IP address.

The sending module 2003 is further configured to: when the second source IP address is the second local source IP address, send the third data packet to the terminal.

In the data transmission apparatus provided in this embodiment of the present invention, a switch obtains the third data packet sent by the target server or the PGW, obtains the correspondence when the third data packet carries the second PDN source IP address, replaces the second local destination IP address carried in the third data packet with the second PDN destination IP address according to the correspondence, generates the fourth data packet, and sends the fourth data packet to the terminal. Compared with the prior art in which only a terminal supporting multiple APNs can be used to establish connections to multiple networks, so as to access the multiple networks, in this embodiment of the present invention, the switch is disposed, and when a data packet sent by the target server or the PGW is transmitted to the switch, the switch can determine a destination IP address according to a source IP address carried in the data packet, so as to determine that the data packet is sourced from an internal local area network of a company or a PDN, and determine a data packet that needs to be sent to the terminal. That is, there is no limitation of a one-to-one correspondence between an APN and a PDN, and the destination IP address is directly used to determine the data packet to be sent to the terminal, so as to send the data packet to the terminal. Therefore, for a terminal for which a single APN is configured, not only a data packet sent by the PDN can be transmitted to the terminal, but also a data packet sent by the internal local area network of the company can be transmitted to the terminal.

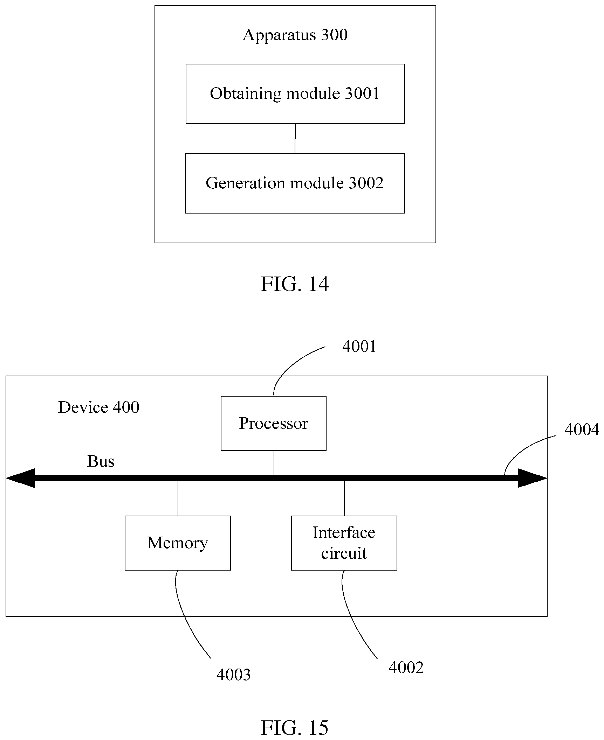

An embodiment of the present invention provides an apparatus 300 for generating an address mapping table. As shown in FIG. 14, the apparatus 300 includes:
an obtaining module 3001, configured to obtain a first packet data network PDN source IP address and a first local source IP address; and
a generation module 3002, configured to generate an address mapping table according to the first PDN source IP address and the first local source IP address that are obtained by the obtaining module 3001, so that a switch forwards a data packet according to the address mapping table, where the address mapping table is used to record a correspondence between the first local source IP address and the first PDN source IP address.

In an implementation of this embodiment of the present invention, the obtaining module 3001 is specifically configured to:
allocate the first local source IP address to a terminal; and
send PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

In the apparatus for an address mapping table in this embodiment of the present invention, the address mapping table may be generated by a local controller after the local controller obtains the first local source IP address and the first PDN source IP address. Compared with the prior art in which only a terminal supporting multiple APNs can be used to establish connections to multiple networks, so as to access the multiple networks, in this embodiment of the present invention, the local controller is disposed, and the local controller generates an address mapping table according to a first PDN source IP address allocated by the PGW to the terminal and a first local source IP address allocated by the local controller to the terminal, so that the switch sends a data packet to a target network according to the address mapping table, or sends a data packet to the terminal according to the address mapping table. Therefore, a terminal for which a single APN is configured can access not only a PDN, but also an internal local area network of a company. For the terminal for which a single APN is configured, not only a data packet sent by the PDN can be transmitted to the terminal, but also a data packet sent by the internal local area network of the company can be transmitted to the terminal.

An embodiment of the present invention provides a data transmission device 400. As shown in FIG. 15, the device 400 includes a processor 4001 and an interface circuit 4002. A memory 4003 and a bus 4004 are further shown in the figure. The processor 4001, the interface circuit 4002, and the memory 4003 are connected to and communicate with each other by using the bus 4004.

It should be noted that the processor 4001 herein may be a processing component, or may be a general term for multiple processing components. For example, the processing component may be a central processing unit (Central Processing Unit, CPU), may be an application-specific integrated circuit (Application Specific Integrated Circuit, ASIC), or may be configured as one or more integrated circuits for implementing this embodiment of the present invention, for example, one or more microprocessors (digital singnal processor, DSP), or one or more field programmable gate arrays (Field Programmable Gate Array, FPGA).

The memory 4003 may be a storage apparatus, or may be a general term for multiple storage components, and is configured to store executable program code, or a parameter, data, and the like that are required for running an access network management device. Moreover, the memory 4003 may include a random access memory (RAM), and may further include a non-volatile memory (non-volatile memory), for example, a disk memory and a flash memory (Flash).

The bus 4004 may be an Industry Standard Architecture (Industry Standard Architecture, ISA) bus, a Peripheral Component Interconnect (Peripheral Component, PCI) bus, an Extended Industry Standard Architecture (Extended Industry Standard Architecture, EISA) bus, or the like. The bus 4004 may be classified into an address bus, a data bus, a control bus, and the like. For ease of description, the bus 4004 is represented by using only one bold line in FIG. 15, which, however, does not mean that there is only one bus or a type of bus.

The device 400 may further include an input/output apparatus that is connected to the bus 4004, so as to connect another part such as the processor 4001 by using the bus 4004.

The processor 4001 invokes the program code in the memory 4003, to perform operations that are performed by the device 400 in the foregoing method embodiments, for example, including:
obtaining a first data packet from a terminal by using the interface circuit 4002, where the first data packet carries a first destination IP address and a first local source IP address, and the first destination IP address includes a first local destination IP address or a first packet data network PDN destination IP address;
when the first destination IP address is the first PDN destination IP address, obtaining an address mapping table from a local controller by using the interface circuit 4002, where the address mapping table is used to record a correspondence between the first local source IP address and a first PDN source IP address;
replacing, by using the processor 4001, the first local source IP address carried in the first data packet with the first PDN source IP address according to the correspondence obtained by using the interface circuit 4002, and generating a second data packet; and
sending the second data packet to a PGW by using the interface circuit 4002.

In an implementation of this embodiment of the present invention, when the address mapping table is not stored in a switch, the interface circuit 4002 is further configured to send request information to the local controller, where the request information is used to trigger the local controller to send the address mapping table to the switch.

In an implementation of this embodiment of the present invention, the interface circuit 4002 is specifically configured to send the second data packet to the PGW by using a PDN connection established by the local controller.

In an implementation of this embodiment of the present invention, the processor 4001 is further configured to determine whether the first destination IP address is the first local destination IP address.

When the processor 4001 obtains, by means of determining, that the first destination IP address is the first local destination IP address, the interface circuit 4002 is further configured to send the first data packet to a target server.

In the data transmission device provided in this embodiment of the present invention, the switch obtains the first data packet sent by the terminal; when the destination IP address carried in the first data packet is the first PDN destination IP address, obtains the address mapping table that records the correspondence between the first local source IP address and the first PDN source IP address; replaces the first local source IP address carried in the first data packet with the first PDN source IP address according to the correspondence, and generates the second data packet; and sends the second data packet to the PGW. Compared with the prior art in which only a terminal supporting multiple APNs can be used to establish connections to multiple networks, so as to access the multiple networks, in this embodiment of the present invention, the switch is disposed, and when a data packet sent by the terminal is transmitted to the switch, the switch can determine, according to a destination IP address carried in the data packet, a to-be-accessed target network of the terminal from an internal local area network of a company and a PDN, and a data packet that needs to be sent to the target network. That is, in a network access process, there is no limitation of a one-to-one correspondence between an APN and a PDN, and the destination IP address is directly used to determine the to-be-accessed target network, so as to send the data packet to the target network. Therefore, a terminal for which a single APN is configured can access not only the PDN, but also the internal local area network of the company.

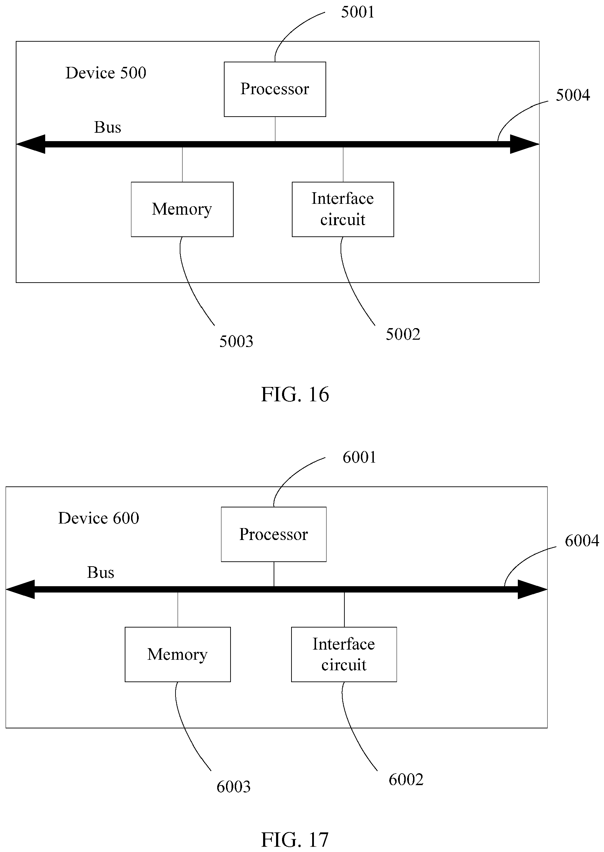

An embodiment of the present invention provides a data transmission device 500. As shown in FIG. 16, the device 500 includes a processor 5001 and an interface circuit 5002. A memory 5003 and a bus 5004 are further shown in the figure. The processor 5001, the interface circuit 5002, and the memory 5003 are connected to and communicate with each other by using the bus 5004.

It should be noted that the processor 5001 herein may be a processing component, or may be a general term for multiple processing components. For example, the processing component may be a central processing unit (Central Processing Unit, CPU), may be an application-specific integrated circuit (Application Specific Integrated Circuit, ASIC), or may be configured as one or more integrated circuits for implementing this embodiment of the present invention, for example, one or more microprocessors (digital singnal processor, DSP), or one or more field programmable gate arrays (Field Programmable Gate Array, FPGA).

The memory 5003 may be a storage apparatus, or may be a general term for multiple storage components, and is configured to store executable program code, or a parameter, data, and the like that are required for running an access network management device. Moreover, the memory 5003 may include a random access memory (RAM), and may further include a non-volatile memory (non-volatile memory), for example, a disk memory and a flash memory (Flash).

The bus 5004 may be an Industry Standard Architecture (Industry Standard Architecture, ISA) bus, a Peripheral Component Interconnect (Peripheral Component, PCI) bus, an Extended Industry Standard Architecture (Extended Industry Standard Architecture, EISA) bus, or the like. The bus 5004 may be classified into an address bus, a data bus, a control bus, and the like. For ease of description, the bus 5004 is represented by using only one bold line in FIG. 16, which, however, does not mean that there is only one bus or a type of bus.

The device 500 may further include an input/output apparatus that is connected to the bus 5004, so as to connect another part such as the processor 5001 by using the bus 5004.

The processor 5001 invokes the program code in the memory 5003 to perform operations that are performed by the device 500 in the foregoing method embodiments, for example, including:
obtaining a third data packet from a target server or a PGW by using the interface circuit 5002, where the third data packet carries a second source IP address and a second local destination IP address, and the second source IP address includes a second local source IP address or a second PDN source IP address;
when the second source IP address is the second PDN source IP address, obtaining an address mapping table from a local controller by using the interface circuit 5002, where the address mapping table is used to record a correspondence between the second local destination IP address and a second PDN destination IP address;
replacing, by using the processor 5001, the second local destination IP address carried in the third data packet with the second PDN destination IP address according to the correspondence, and generating a fourth data packet; and
sending the fourth data packet to a terminal by using the interface circuit 5002.

In an implementation of this embodiment of the present invention, the processor 5001 is further configured to determine whether the second source IP address is the second local source IP address; and
the interface circuit is further configured to: when the second source IP address is the second local source IP address, send the third data packet to the terminal.

In the data transmission device provided in this embodiment of the present invention, a switch obtains the third data packet sent by the target server or the PGW, obtains the correspondence when the third data packet carries the second PDN source IP address, replaces the second local destination IP address carried in the third data packet with the second PDN destination IP address according to the correspondence, generates the fourth data packet, and sends the fourth data packet to the terminal. Compared with the prior art in which only a terminal supporting multiple APNs can be used to establish connections to multiple networks, so as to access the multiple networks, in this embodiment of the present invention, the switch is disposed, and when a data packet sent by the target server or the PGW is transmitted to the switch, the switch can determine a destination IP address according to a source IP address carried in the data packet, so as to determine that the data packet is sourced from an internal local area network of a company or a PDN, and determine a data packet that needs to be sent to the terminal. That is, there is no limitation of a one-to-one correspondence between an APN and a PDN, and the destination IP address is directly used to determine the data packet to be sent to the terminal, so as to send the data packet to the terminal. Therefore, for a terminal for which a single APN is configured, not only a data packet sent by the PDN can be transmitted to the terminal, but also a data packet sent by the internal local area network of the company can be transmitted to the terminal.

An embodiment of the present invention provides a device 600 for generating an address mapping table. As shown in FIG. 17, the device 600 includes a processor 6001 and an interface circuit 6002. A memory 6003 and a bus 6004 are further shown in the figure. The processor 6001, the interface circuit 6002, and the memory 6003 are connected to and communicate with each other by using the bus 6004.

It should be noted that the processor 6001 herein may be a processing component, or may be a general term for multiple processing components. For example, the processing component may be a central processing unit (Central Processing Unit, CPU), may be an application-specific integrated circuit (Application Specific Integrated Circuit, ASIC), or may be configured as one or more integrated circuits for implementing this embodiment of the present invention, for example, one or more microprocessors (digital singnal processor, DSP), or one or more field programmable gate arrays (Field Programmable Gate Array, FPGA).

The memory 6003 may be a storage apparatus, or may be a general term for multiple storage components, and is configured to store executable program code, or a parameter, data, and the like that are required for running an access network management device. Moreover, the memory 6003 may include a random access memory (RAM), and may further include a non-volatile memory (non-volatile memory), for example, a disk memory and a flash memory (Flash).

The bus 6004 may be an Industry Standard Architecture (Industry Standard Architecture, ISA) bus, a Peripheral Component Interconnect (Peripheral Component, PCI) bus, an Extended Industry Standard Architecture (Extended Industry Standard Architecture, EISA) bus, or the like. The bus 6004 may be classified into an address bus, a data bus, a control bus, and the like. For ease of description, the bus 6004 is represented by using only one bold line in FIG. 17, which, however, does not mean that there is only one bus or a type of bus.

The device 600 may further include an input/output apparatus that is connected to the bus 6004, so as to connect another part such as the processor 6001 by using the bus 6004.

The processor 6001 invokes the program code in the memory 6003 to perform operations that are performed by the device 600 in the foregoing method embodiments, for example, including:
obtaining a first PDN source IP address and a first local source IP address by using the interface circuit 6002; and
generating, by using the processor 6001, an address mapping table according to the first PDN source IP address and the first local source IP address, so that a switch forwards a data packet according to the address mapping table, where the address mapping table is used to record a correspondence between the first local source IP address and the first PDN source IP address.

In an implementation of this embodiment of the present invention, the interface circuit 6002 is specifically configured to:
allocate the first local source IP address to a terminal; and
send PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

In the device for an address mapping table in this embodiment of the present invention, the address mapping table may be generated by a local controller after the local controller obtains the first local source IP address and the first PDN source IP address. Compared with the prior art in which only a terminal supporting multiple APNs can be used to establish connections to multiple networks, so as to access the multiple networks, in this embodiment of the present invention, the local controller is disposed, and the local controller generates an address mapping table according to a first PDN source IP address allocated by the PGW to the terminal and a first local source IP address allocated by the local controller to the terminal, so that the switch sends a data packet to a target network according to the address mapping table, or sends a data packet to the terminal according to the address mapping table. Therefore, a terminal for which a single APN is configured can access not only a PDN, but also an internal local area network of a company. For the terminal for which a single APN is configured, not only a data packet sent by the PDN can be transmitted to the terminal, but also a data packet sent by the internal local area network of the company can be transmitted to the terminal.

The embodiments in this specification are all described in a progressive manner. For same or similar parts in the embodiments, reference may be made to these embodiments, and each embodiment focuses on a difference from other embodiments. Particularly, a device embodiment is basically similar to a method embodiment, and therefore is described briefly. For related parts, refer to partial descriptions in the method embodiment.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method comprises:
obtaining, by a switch, a first data packet sent by a terminal, wherein the first data packet carries a first destination IP address and a first local source IP address, and the first destination IP address comprises a first local destination IP address or a first packet data network PDN destination IP address;
when the first destination IP address is the first PDN destination IP address, obtaining, by the switch, an address mapping table from a local controller, wherein the address mapping table is used to record a correspondence between the first local source IP address and a first PDN source IP address;
replacing, by the switch, the first local source IP address carried in the first data packet with the first PDN source IP address according to the correspondence, and generating a second data packet; and
sending, by the switch, the second data packet to a PDN gateway PGW.

2. The method according to claim 1, wherein before the obtaining, by the switch, an address mapping table from a local controller, the method comprises:
when the address mapping table is not stored in the switch, sending, by the switch, request information to the local controller, wherein the request information is used to trigger the local controller to send the address mapping table to the switch.

3. The method according to claim 1 or 2, wherein the sending, by the switch, the second data packet to a PGW comprises:
sending, by the switch, the second data packet to the PGW by using a PDN connection established by the local controller.

4. The method according to any one of claims 1 to 3, wherein before the obtaining, by the switch, an address mapping table from a local controller, the method further comprises:
determining, by the switch, whether the first destination IP address is the first local destination IP address; and
when the first destination IP address is the first local destination IP address, sending, by the switch, the first data packet to a target server.

5. A data transmission method, wherein the method comprises:
obtaining, by a switch, a third data packet sent by a target server or a packet data network PDN gateway PGW, wherein the third data packet carries a second source IP address and a second local destination IP address, and the second source IP address comprises a second local source IP address or a second PDN source IP address;
when the second source IP address is the second PDN source IP address, obtaining, by the switch, an address mapping table from a local controller, wherein the address mapping table is used to record a correspondence between the second local destination IP address and a second PDN destination IP address;
replacing, by the switch, the second local destination IP address carried in the third data packet with the second PDN destination IP address according to the correspondence, and generating a fourth data packet; and
sending, by the switch, the fourth data packet to a terminal.

6. The method according to claim 5, wherein before the obtaining, by the switch, an address mapping table from a local controller, the method further comprises:
determining, by the switch, whether the second source IP address is the second local source IP address; and
when the second source IP address is the second local source IP address, sending, by the switch, the third data packet to the terminal.

7. A method for generating an address mapping table, wherein the method comprises:
obtaining, by a local controller, a first packet data network PDN source IP address and a first local source IP address; and
generating, by the local controller, an address mapping table according to the first PDN source IP address and the first local source IP address, so that a switch forwards a data packet according to the address mapping table, wherein the address mapping table is used to record a correspondence between the first local source IP address and the first PDN source IP address.

8. The method according to claim 7, wherein the obtaining, by a local controller, a first packet data network PDN source IP address and a first local source IP address comprises:
allocating, by the local controller, the first local source IP address to a terminal; and
sending, by the local controller, PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

9. A data transmission apparatus, wherein the apparatus comprises:
an obtaining module, configured to obtain a first data packet sent by a terminal, wherein the first data packet carries a first destination IP address and a first local source IP address, the first destination IP address comprises a first local destination IP address or a first packet data network PDN destination IP address, and
the obtaining module is further configured to: when the first destination IP address is the first PDN destination IP address, obtain an address mapping table from a local controller, wherein the address mapping table is used to record a correspondence between the first local source IP address and a first PDN source IP address;
a generation module, configured to replace the first local source IP address carried in the first data packet with the first PDN source IP address according to the correspondence obtained by the obtaining module, and generate a second data packet; and
a sending module, configured to send the second data packet to a PDN gateway PGW.

10. The apparatus according to claim 9, wherein the sending module is further configured to:
when the address mapping table is not stored in the switch, send request information to the local controller, wherein the request information is used to trigger the local controller to send the address mapping table to the switch.

11. The apparatus according to claim 9 or 10, wherein the sending module is specifically configured to:
send the second data packet to the PGW by using a PDN connection established by the local controller.

12. The apparatus according to any one of claims 9 to 11, wherein the apparatus further comprises:
a determining module, configured to determine whether the first destination IP address is the first local destination IP address; and
the sending module is further configured to: when the first destination IP address is the first local destination IP address, send the first data packet to a target server.

13. A data transmission apparatus, wherein the apparatus comprises:
an obtaining module, configured to obtain a third data packet sent by a target server or a packet data network PDN gateway PGW, wherein the third data packet carries a second source IP address and a second local destination IP address, the second source IP address comprises a second local source IP address or a second PDN source IP address, and
the obtaining module is further configured to: when the second source IP address is the second PDN source IP address, obtain an address mapping table from a local controller, wherein the address mapping table is used to record a correspondence between the second local destination IP address and a second PDN destination IP address;
a generation module, configured to replace the second local destination IP address carried in the third data packet with the second PDN destination IP address according to the correspondence obtained by the obtaining module, and generate a fourth data packet; and
a sending module, configured to send, to a terminal, the fourth data packet generated by the generation module.

14. The apparatus according to claim 13, wherein the apparatus further comprises:
a determining module, configured to determine whether the second source IP address is the second local source IP address; and
the sending module is further configured to: when the second source IP address is the second local source IP address, send the third data packet to the terminal.

15. An apparatus for generating an address mapping table, wherein the apparatus comprises:
an obtaining module, configured to obtain a first packet data network PDN source IP address and a first local source IP address; and
a generation module, configured to generate an address mapping table according to the first PDN source IP address and the first local source IP address that are obtained by the obtaining module, so that a switch forwards a data packet according to the address mapping table, wherein the address mapping table is used to record a correspondence between the first local source IP address and the first PDN source IP address.

16. The apparatus according to claim 7, wherein the obtaining module is specifically configured to:
allocate the first local source IP address to a terminal; and
send PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.

17. A data transmission device, wherein the device comprises an interface circuit and a processor, wherein the interface circuit is configured to obtain a first data packet sent by a terminal, the first data packet carries a first destination IP address and a first local source IP address, and the first destination IP address comprises a first local destination IP address or a first packet data network PDN destination IP address;
the interface circuit is further configured to: when the first destination IP address is the first PDN destination IP address, obtain an address mapping table from a local controller, wherein the address mapping table is used to record a correspondence between the first local source IP address and a first PDN source IP address;
the processor is configured to replace the first local source IP address carried in the first data packet with the first PDN source IP address according to the correspondence obtained by the interface circuit, and generate a second data packet; and
the interface circuit is further configured to send the second data packet to a PDN gateway PGW.

18. The device according to claim 17, wherein the interface circuit is further configured to:
when the address mapping table is not stored in the switch, send request information to the local controller, wherein the request information is used to trigger the local controller to send the address mapping table to the switch.

19. The device according to claim 17 or 18, wherein the interface circuit is specifically configured to:
send the second data packet to the PGW by using a PDN connection established by the local controller.

20. The device according to any one of claims 17 to 19, wherein the processor is further configured to:
determine whether the first destination IP address is the first local destination IP address; and
when the first destination IP address is the first local destination IP address, send the first data packet to a target server.

21. A data transmission device, wherein the device comprises an interface circuit and a processor, wherein the interface circuit is configured to obtain a third data packet sent by a target server or a packet data network PDN gateway PGW, the third data packet carries a second source IP address and a second local destination IP address, and the second source IP address comprises a second local source IP address or a second PDN source IP address;
the interface circuit is further configured to: when the second source IP address is the second PDN source IP address, obtain an address mapping table from a local controller, wherein the address mapping table is used to record a correspondence between the second local destination IP address and a second PDN destination IP address;
the processor is configured to replace the second local destination IP address carried in the third data packet with the second PDN destination IP address according to the correspondence, and generate a fourth data packet; and
the interface circuit is further configured to send the fourth data packet to a terminal.

22. The device according to claim 21, wherein the processor is further configured to determine whether the second source IP address is the second local source IP address; and
the interface circuit is further configured to: when the second source IP address is the second local source IP address, send the third data packet to the terminal.

23. A device for generating an address mapping table, wherein the device comprises an interface circuit and a processor, wherein the interface circuit is configured to obtain a first packet data network PDN source IP address and a first local source IP address; and
the processor is configured to generate an address mapping table according to the first PDN source IP address and the first local source IP address, so that a switch forwards a data packet according to the address mapping table, wherein the address mapping table is used to record a correspondence between the first local source IP address and the first PDN source IP address.

24. The device according to claim 23, wherein the interface circuit is specifically configured to:
allocate the first local source IP address to a terminal; and
send PDN connection request information to a mobility management entity MME, so that the MME sends the connection request information to a PDN gateway PGW by using a serving gateway SGW, to establish a PDN connection between the terminal and the PGW, so that the PGW allocates the first PDN source IP address to the terminal.
